# EUROPÄISCHE PATENTANMELDUNG

(11) **EP 4 714 254 A1**
(43) Veröffentlichungstag der Anmeldung: **25.03.2026**
(21) Anmeldenummer: 25193643.1
(22) Anmeldetag: 04.08.2025
(51) Int. Cl.: A01F 12/44

(54) **SELBSTFAHRENDER MÄHDRESCHER**

(30) Priorität: 23.09.2024 DE 102024127440
(71) Anmelder: CLAAS Selbstfahrende Erntemaschinen GmbH, 33428 Harsewinkel (DE)
(72) Erfinder: LEHMBERG, Andreas, 33428 Harsewinkel (DE); BECKMANN, Hermann-Konstantin, 32584 Löhne (DE); DIEKAMP, Andreas, 49176 Hilter (DE)
(74) Vertreter: CLAAS Gruppe

(57) **Zusammenfassung**

Die Erfindung betrifft einen selbstfahrender Mähdrescher (1), umfassend ein Dreschorgan (2) zur Ablösung von Früchten aus Pflanzen, einen unterhalb des Dreschorgans (2) angeordneten Vorbereitungsboden (22), welchem die aus dem Dreschorgan (2) abgeschiedenen Früchte zuführbar sind, wobei der Vorbereitungsboden (22) als ein Stufenboden mit zumindest einer ersten Stufe (16) und einer zweiten Stufe (17) ausgebildet ist, ein Reinigungsorgan (4) mit einem Obersieb (5) und einem Untersieb (6) zur Trennung abgelöster Früchte von Pflanzenresten, wobei die zweite Stufe (17) des Vorbereitungsbodens (22) unterhalb der ersten Stufe (16) angeordnet ist und sich in Längsrichtung des Mähdreschers (1) betrachtet im Wesentlichen entlang einer gesamten Länge (38) der ersten Stufe (16) erstreckt.

## Beschreibung

Die Erfindung betrifft einen selbstfahrenden Mähdrescher gemäß dem Oberbegriff des Anspruchs 1.

Der Mähdrescher umfasst ein Dreschorgan, dem abgeschnittene Pflanzen von einem vorderseitig an dem Mähdrescher angeordneten Vorsatzgerät zuführbar sind. Das Dreschorgan umfasst typischerweise eine Mehrzahl von Dreschelementen, beispielsweise eine tangentiale Dreschtrommel. Das Dreschorgan ist dazu eingerichtet, die geschnittenen Pflanzen derart zu verarbeiten, dass Früchte von Pflanzenresten abgelöst werden. Beispielsweise können Körner aus Ähren ausgedroschen werden, sodass die Körner fortan getrennt von dem Rest der jeweiligen Pflanze vorliegen, der sodann den Pflanzenrest bildet. Ein wesentlicher Teil der Früchte sowie feine Pflanzenreste sind unmittelbar im Bereich des Dreschorgans durch einen Dreschkorb desselben abscheidbar, wobei die Früchte von dem Dreschorgan ausgehend nach unten auf einen Vorbereitungsboden geleitet werden. Im Übrigen kann ein aus Früchten und Pflanzenresten gebildetes Gemisch ausgehend von dem Dreschorgan an ein Trennorgan weitergeleitet werden, mittels dessen zumindest grobe Pflanzenreste von den Früchten sowie feinen Pflanzenresten trennbar sind. Die Pflanzenreste werden typischerweise an einer Rückseite des Mähdreschers ausgeworfen, wobei sie gegebenenfalls zuvor mittels eines Häckselorgans gehäckselt werden können.

Die mittels des Trennorgans abgetrennten Früchte und feinen Pflanzenreste werden an ein Reinigungsorgan weitergeleitet, mittels dessen die verbliebenen feinen Pflanzenreste abgesiebt werden. Ferner werden dem Reinigungsorgan die Früchte und feinen Pflanzenreste zugeleitet, die bereits mittels des Dreschkorbs des Dreschorgans abgeschieden wurden. Diese werden mittels des Vorbereitungsbodens dem Sieborgan zugeleitet.

Die Trennung der Früchte von den feinen Pflanzenresten, beispielsweise Spreu, mittels des Reinigungsorgans erfolgt typischerweise mittels eines Luftvolumenstroms, der entlang des Sieborgans geleitet wird. Dieser ist dazu geeignet, die feinen und mithin leichten Pflanzenreste zu mobilisieren und in Richtung des hinteren Endes des Mähdreschers zu befördern. Die demgegenüber schwereren, nicht schwebefähigen Früchte werden nicht von dem Luftvolumenstrom beeinflusst und können auf diese Weise von den Pflanzenresten getrennt werden. Zur Erzeugung des Luftvolumenstroms kann der Mähdrescher ein Saugwindgebläse umfassen, dass einem in Längsrichtung des Mähdreschers betrachtet hinteren Ende des Sieborgans zugeordnet ist. Eine Saugseite dieses Saugwindgebläses ist dem Sieborgan zugeordnet, sodass das Saugwindgebläse dazu geeignet ist, den Luftvolumenstrom ausgehend von einem in Längsrichtung des Mähdreschers betrachtet vor dem Reinigungsorgan angeordneten Lufteintrittsquerschnitt entlang des Reinigungsorgans zu führen, sodass in der gewünschten Weise die feinen Pflanzenreste erfasst und abtransportiert werden können.

Mähdrescher der vorstehend beschrieben Art sind im Stand der Technik bereits bekannt. Hierzu wird beispielhaft auf die EP 4 268 570 A1 hingewiesen. Diese beschreibt eine Steinfangmulde für einen Mähdrescher, die im Wesentlichen zwischen dem Vorbereitungsboden und dem Dreschorgan angeordnet ist. Hierbei schlägt die EP 4 268 570 A1 vor, dass die Steinfangmulde einen Lufteintrittsquerschnitt ausbildet, durch den Hindurch ein Luftvolumenstrom hin zu dem Saugwindgebläse angesogen wird. Hierbei befindet sich der Lufteintrittsquerschnitt oberhalb der vorderen Stufe des Vorbereitungsbodens.

Im Stand der Technik hat es sich als nachteilig herausgestellt, dass in einem Bereich zwischen dem Vorbereitungsboden und dem Dreschorgan im Zuge des Betriebes des Mähdreschers ein Kornverlust auftritt. Dieser kommt dadurch zustande, dass im Bereich zwischen dem Dreschkorb und dem Vorbereitungsboden Früchte in unbeabsichtigter Weise nach vorne, bzw. in Richtung der Steinfangmulde beschleunigt werden, sodass trotz des in der EP 4 268 570 A1 beschriebenen Rieselkornschutz am mittels der Steinfangmulde ausgebildeten Lufteintrittsbereichs Kornverluste auftreten können. Weiterhin wird bei der Anordnung eines Lufteintrittsbereichs im Bereich der Steinfangmulde das für die Steinfangmulde zur Verfügung stehende Volumen reduziert und somit die Aufnahmefähigkeit der Steinfangmulde reduziert.

Es ist Aufgabe der Erfindung, die beschriebenen Nachteile des Standes der Technik zu vermeiden und insbesondere die Luftführung eines Mähdreschers zu verbessern und Kornverluste zu vermeiden.

Diese Aufgabe wird erfindungsgemäß durch die kennzeichnenden Merkmale des Anspruchs 1 gelöst. Vorteilhafte Weiterbildungen sind Gegenstand der abhängigen Ansprüche.

Gemäß dem Anspruch 1 wird ein selbstfahrender Mähdrescher vorgeschlagen, umfassend ein Dreschorgan zur Ablösung von Früchten aus Pflanzen, einen unterhalb des Dreschorgans angeordneten Vorbereitungsboden, welchem die aus dem Dreschorgan abgeschiedenen Früchte zuführbar sind, wobei der Vorbereitungsboden als ein Stufenboden mit zumindest einer ersten Stufe und einer zweiten Stufe ausgebildet ist, ein Reinigungsorgan mit einem Obersieb und einem Untersieb zur Trennung abgelöster Früchte von Pflanzenresten, wobei die zweite Stufe des Vorbereitungsbodens unterhalb der ersten Stufe angeordnet ist und sich in Längsrichtung des Mähdreschers betrachtet im Wesentlichen entlang einer gesamten Länge der ersten Stufe erstreckt.

Dadurch, dass die zweite Stufe sich im Wesentlichen entlang der gesamten Länge der ersten Stufe unterhalb der ersten Stufe erstreckt, entsteht ein großer Überlappungsbereich zwischen der ersten Stufe und der zweiten Stufe. Hierdurch kann Früchten, die auf der zweiten Stufe in Richtung des vorderen Endes herabrutschen eine lange Oberfläche geboten werden, mittels derer den Früchten eine nach hinten hin zu dem Reinigungsorgan gerichtete Bewegung aufprägbar ist. Mithin werden durch die nach vorne verlängerte Oberfläche der zweiten Stufe die Kornverluste reduziert, da weniger Früchte am vorderen Ende der zweiten Stufe herunterfallen. Dadurch, dass sich die zweite Stufe im Wesentlichen entlang der gesamten Länge der ersten Stufe erstreckt, liegt das vordere Ende der zweiten Stufe unterhalb des vorderen Endes der ersten Stufe. Demgemäß befinden sich die vorderen Enden sowohl der ersten als auch der zweiten Stufe in einem vorderen Bereich des Mähdreschers, sodass die Stufen besonders gut von dem vorderen Bereich des Mähdreschers zugänglich und auswechselbar sind.

Eine vorteilhafte Weiterbildung sieht vor, dass der Mähdrescher ein in Längsrichtung des Mähdreschers hinter dem Reinigungsorgan angeordnetes Saugwindgebläse zur Erzeugung eines Luftvolumenstroms umfasst, mittels dessen das Reinigungsorgan fortwährend reinigbar ist, wobei das Saugwindgebläse eine dem Reinigungsorgan zugeordnete Saugseite, an der der Luftvolumenstrom ansaugbar ist, und eine von dem Reinigungsorgan weg gerichtete Druckseite, an der der Luftvolumenstrom abgebbar ist. In Kombination mit dem großen Überlappungsbereich der ersten und zweiten Stufe kann das Saugwindgebläse aus dem zwischen der ersten und zweiten Stufe entstehenden Kanal einen in Längsrichtung des Kanals gerichteten Luftvolumenstrom durch den Kanal ansaugen.

Eine weitere vorteilhafte Weiterbildung sieht vor, dass die Stufen beabstandet zueinander angeordnet sind und zwischen zwei benachbarten Stufen jeweils eine Fallstufe ausgebildet ist. Durch die Fallstufen ist zumindest ein Teilstrom eines Luftvolumenstroms leitbar, sodass ein in den Fallstufen herabfallender Erntegutstrom von dem Luftvolumenstrom durchdrungen wird und bereits in den Fallstufen leichtere Nichtkornbestandteile von den Früchten abgeschieden werden.

Gemäß einer vorteilhaften Ausgestaltung kann zwischen der ersten Stufe und der zweiten Stufe ein Luftleitkanal ausgebildet sein, durch den hindurch zumindest ein Teilstrom des Luftvolumenstroms ansaugbar ist. Der Luftleitkanal kann obenseitig von einer Unterseite der ersten Stufe und untenseitig von einer Oberseite der zweiten Stufe begrenzt sein.

Gemäß einer weiteren vorteilhaften Weiterbildung kann die zweite Stufe an ihrem vorderen Ende ein Verlängerungselement mit einer gestuften Oberfläche umfassen, wobei das Verlängerungselement vorzugsweise untenseitig an der ersten Stufe ortsfest angeordnet, insbesondere verschraubt oder verschweißt ist. Die gestufte Oberfläche kann bewirken, dass Früchte, die auf der zweiten Stufe in Richtung des vorderen Endes herabrutschen, wieder nach hinten befördert werden, sodass am vorderen Ende der zweiten Stufe keine oder zumindest weniger Früchte herabfallen und somit verloren gehen.

Besonders vorteilhaft ist es, wenn die zweite Stufe sich in Längsrichtung des Mähdreschers betrachtet unterhalb des Dreschorgans erstreckt und in einem hinter dem Dreschorgan befindlichen Bereich mit einer unterhalb der zweiten Stufe befindlichen dritten Stufe eine weitere Fallstufe ausbildet.

Vorzugsweise kann das Dreschorgan zumindest eine Dreschtrommel und eine der Dreschtrommel vorgeordnete Beschleunigungstrommel umfassen, wobei zwischen einem die Dreschtrommel abschnittsweise umgebenden Dreschkorb und einem die Beschleunigungstrommel abschnittsweise umgebenden Korbabschnitt eine Knickstelle ausgebildet ist, wobei sich die erste Stufe in Längsrichtung des Mähdreschers betrachtet ausgehend von einem vorderen Ende bis zu einem hinteren Ende erstreckt, wobei das hintere Ende vor der Knickstelle oder unterhalb der Knickstelle positioniert ist. Gemäß dieser vorteilhaften Ausgestaltung umfasst die erste Stufe keinen unterhalb des Dreschkorbs befindlichen Erstreckungsbereich. Hierdurch ergibt sich ein vergrößerter freibleibender Raum unterhalb des Dreschkorbs, der sich zwischen dem Dreschkorb und der zweiten Stufe erstreckt und im Betriebszustand des Mähdreschers mit sehr hoher Ernteleistung viel Volumen für die am Dreschkorb abgeschiedenen Früchte bereitstellt.

Um einen Kornverlust am vorderen Ende der zweiten Stufe entgegenzuwirken, kann an dem vorderen Ende der zweiten Stufe ein als Labyrinth ausgebildet Rieselkornschutz angeordnet sein.

Die vorliegende Erfindung wird nachstehend anhand eines in den Zeichnungen dargestellten Ausführungsbeispiels näher erläutert. Es zeigt:
- Figur 1: Schematisch und exemplarisch eine perspektivische Ansicht von Arbeitsorganen eines Mähdreschers;
- Figur 2: Schematisch und exemplarisch eine Schnittansicht durch einen Mähdrescher gemäß Figur 1.

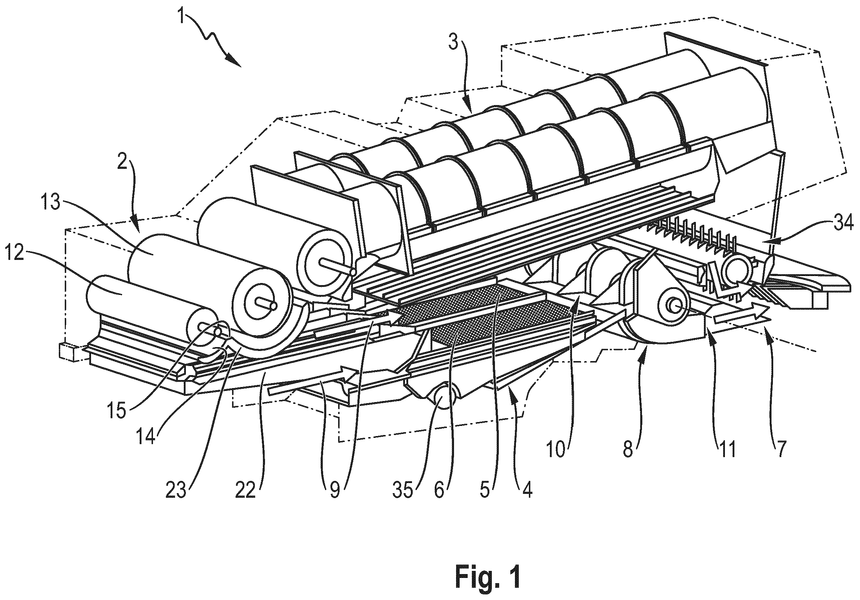

In Figur 1 ist eine schematische Ansicht von Arbeitsorganen eines Mähdreschers 1 dargestellt. Der Mähdrescher 1 umfasst eine Mehrzahl von Arbeitsorganen, wobei in dem gezeigten Beispiel der Mähdrescher 1 zumindest ein Dreschorgan 2, ein Trennorgan 3, ein Häckselorgan 34, ein Austragorgan 7, ein Reinigungsorgan 4 sowie ein Förderorgan 35 umfasst. Mittels eines nicht dargestellten Vorsatzgeräts sind auf einem Feld aufstehende Pflanzen abschneidbar, die sodann zu dem Dreschorgan 2 transportiert werden.

Mittels des Dreschorgans 2 werden Früchte von übrigen Pflanzenresten der geernteten Pflanzen abgelöst. Das Dreschorgan 2 umfasst eine Beschleunigungstrommel 12 und eine der Beschleunigungstrommel 12 prozesstechnisch nachgeordnete Dreschtrommel 13. Die Dreschtrommel 13 ist von einem konzentrisch zu der Dreschtrommel 13 angeordneten Dreschkorb 23 abschnittsweise umgeben. Die Beschleunigungstrommel 12 ist von einem weiteren Korbabschnitt 14 untenseitig abschnittsweise umgeben, wobei der Korbabschnitt 14 konzentrisch zu der Beschleunigungstrommel 12 angeordnet ist. Der Dreschkorb 23 und der Korbabschnitt 14 sind unter Ausbildung einer Knickstelle 15 miteinander verbunden. Um zu vermeiden, dass Steine dem Dreschorgan 2 zugeführt werden, ist dem Korbabschnitt 14 eine Steinfangmulde 48 vorgeordnet. Ein Großteil der abgelösten Früchte wird innerhalb des Dreschorgans 2 unmittelbar durch den Dreschkorb 23 hindurch auf einen mehrstufigen Vorbereitungsboden 22 abgeschieden. Die Pflanzenreste werden zusammen mit verbliebenen Früchten von dem Dreschorgan 2 an das Trennorgan 3 übergeben, das in dem gezeigten Beispiel von einem Axialabscheiderotor gebildet ist. Mittels des Trennorgans 3 werden die noch nicht durch den Dreschkorb 23 abgeschiedenen Früchte von einem wesentlichen Teil der Pflanzenreste getrennt und an das unterhalb des Trennorgans 3 angeordnete Reinigungsorgan 4 übergeben. Die Pflanzenreste werden hingegen an einem rückwärtigen Ende des Mähdreschers 1 dem Häckselorgan 34 zugeführt, mittels Letzterem gehäckselt und schließlich mittels des Austragorgans 7 aus dem Mähdrescher 1 ausgetragen. Die Früchte werden mittels des Reinigungsorgans 4 von verbliebenen feinen Pflanzenresten getrennt und schließlich dem Förderorgan 35 zugeführt, das sich unterhalb des Reinigungsorgans 4 befindet. Mittels des Förderorgans 35 werden die Früchte hin zu einem nicht dargestellten Kornelevator und von dort zu einem ebenfalls nicht dargestellten Lagertank gefördert, in dem sie gesammelt werden.

Der Mähdrescher 1 verfügt des Weiteren über ein Saugwindgebläse 8, das an einem in Längsrichtung des Mähdreschers 1 betrachtet hinteren Ende des Reinigungsorgans 4 an selbiges angeschlossen ist. Die Längsrichtung des Mähdreschers 1 entspricht der in Vorwärtsfahrtrichtung gerichteten Richtung. Das Saugwindgebläse 8 ist dazu vorgesehen und eingerichtet an einer Saugseite 10 einen Luftvolumenstrom 9 anzusaugen und diesen an einer Druckseite 11 wieder abzugeben. Hierbei ist die Saugseite 10 derart dem Reinigungsorgan 4 zugeordnet, dass der angesaugte Luftvolumenstrom 9 entlang des Reinigungsorgans 4 geführt wird. Das Saugwindgebläse 8 ist auf diese Weise dazu geeignet, feine Pflanzenreste, die mittels des Reinigungsorgans 4 abgeschieden werden, von dem Reinigungsorgan 4 abzusaugen. Um dies zu erreichen, werden die Pflanzenreste mittels des Luftvolumenstroms 9 fluidisiert und in Richtung des Saugwindgebläses 8 abtransportiert.

Das Reinigungsorgan 4 umfasst in dem gezeigten Beispiel ein Obersieb 5 sowie ein unterhalb des Obersiebs 5 angeordnetes Untersieb 6. Um den Effekt der Abreinigung der Pflanzenreste von dem Reinigungsorgan 4 zu erreichen, wird der Luftvolumenstrom 9 sowohl entlang einer Oberseite 24 des Obersiebs 5, einer Unterseite 25 des Obersiebs 5 sowie einer Unterseite 26 des Untersiebs 6 geführt. Einzelne Teile 18, 19, 20 des Luftvolumenstroms 9 werden dem Reinigungsorgan 4 gerichtet zugeführt.

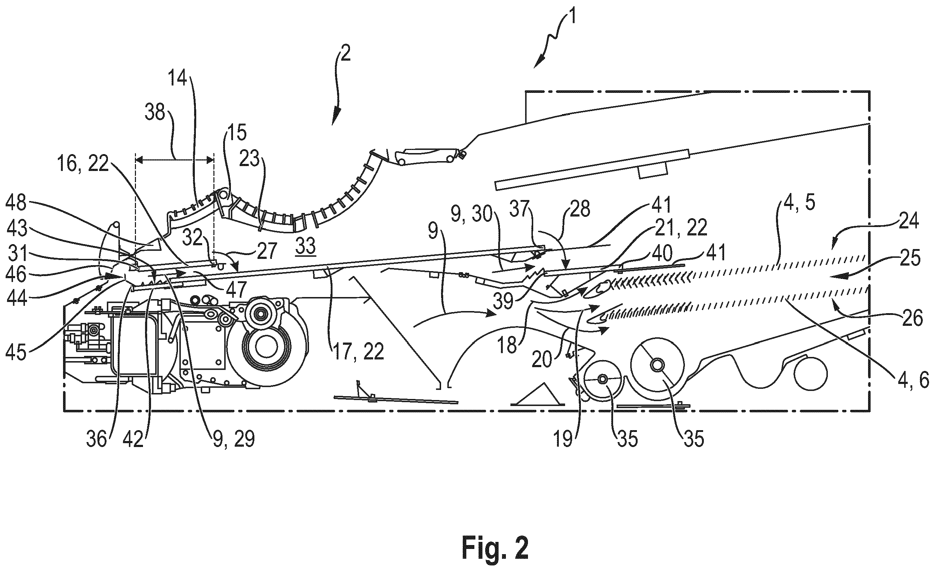

Wie in Fig. 2 dargestellt ist, umfasst der Unterhalb des Dreschorgans 2 angeordnete Vorbereitungsboden 22 mehrere Stufen. Hier und vorzugsweise umfasst der Vorbereitungsboden 22 eine erste Stufe 16, eine zweite Stufe 17 und eine dritte Stufe 21. Die Stufen 16, 17, 21 sind jeweils beabstandet zueinander angeordnet. Im bestimmungsgemäßen Betriebszustand sind die Stufen oszillierend angetrieben, wobei auf den Stufenböden 16, 17, 21 befindliche Früchte und Pflanzenreste hin zu dem Reinigungsorgan 4 transportiert werden.

Hierbei ist zwischen der ersten Stufe 16 und der zweiten Stufe 17 eine erste Fallstufe 27 ausgebildet, in der von der ersten Stufe 16 Früchte und Pflanzenrest auf die zweite Stufe 17 herabfallen. Eine zweite Fallstufe 28 ist zwischen der zweiten Stufe 17 und der dritten Stufe 21 ausgebildet, bei der von der zweiten Stufe 17 hintenseitig Früchte und Pflanzenreste auf die dritte Stufe 21 herabfallen. Die zweite Fallstufe 28 befindet sich in Längsrichtung des Mähdreschers 1 betrachtet hinter dem Dreschorgan 2. Zumindest ein Teil 29 des Luftvolumenstroms 9 durchdringt hierbei die erste Fallstufe 27 und ein weiterer Teil 30 des Luftvolumenstrom 9 die zweite Fallstufe 28. Hierbei werden die in den Fallstufen 27, 28 herabfallenden Früchte und Pflanzenreste aufgelockert und bereits kleinere und leichtere Pflanzenreste abgesaugt.

Erfindungsgemäß ist die zweite Stufe 17 des Vorbereitungsbodens 22 unterhalb der ersten Stufe 16 angeordnet und erstreckt sich in Längsrichtung des Mähdreschers 1 betrachtet im Wesentlichen entlang der gesamten sich in Längsrichtung des Mähdreschers 1 erstreckenden Länge 38 der ersten Stufe 16. Als Länge 38 der ersten Stufe 16 ist im Sinne der vorliegenden Anmeldung die in Längsrichtung des Mähdreschers 1 betrachtete Erstreckung der ersten Stufe 16 zu verstehen. Die erste Stufe 16 umfasst ein vorderes Ende 31, welches einer Vorderseite des Mähdreschers 1 zugewandt ist und ein dem vorderen Ende 31 gegenüberliegendes hinteres Ende 32, welches einer Rückseite des Mähdreschers 1, also dem Reinigungsorgan 4 zugewandt ist. Die erste Stufe 16 erstreckt sich zwischen diesen beiden Enden 31, 32 im Wesentlichen in Längsrichtung des Mähdreschers 1 und in Querrichtung des Mähdreschers 1. Das hintere Ende 32 befindet sich in vertikaler Richtung betrachtet unterhalb der Knickstelle 15. Mithin umfasst die erste Stufe 16 keinen Erstreckungsbereich unterhalb des zur Dreschtrommel 13 konzentrisch angeordneten Dreschkorbs 23. Hierdurch ergibt sich ein vergrößerter freibleibender Raum 33 unterhalb des Dreschkorbs 23, der sich zwischen dem Dreschkorb 23 und der zweiten Stufe 17 erstreckt und im Betriebszustand des Mähdreschers 1 mit sehr hoher Ernteleistung viel Volumen für die am Dreschkorb 23 abgeschiedenen Früchte bereitstellt. Ein vorderes Ende 36 der zweiten Stufe 17 befindet sich in vertikaler Richtung des Mähdreschers 1 betrachtet unterhalb des vorderen Endes 31 der ersten Stufe 16. Ausgehend von dem vorderen Ende 36 erstreckt sich die zweite Stufe 17 in Längsrichtung des Mähdreschers 1 betrachtet zumindest unterhalb des gesamten Dreschorgans 2 bis hin zu einem hinteren Ende 37, das dem Reinigungsorgan 4 zugewandt ist. In Querrichtung des Mähdreschers 1 betrachtet, erstrecken sich die Stufen 16, 17, 21 im Wesentlichen zwischen den hier nicht näher dargestellten Seitenwänden des Mähdreschers 1. Demgemäß überdeckt die erste Stufe 16 in ihrer gesamtheitlichen Erstreckung die zweite Stufe 17 in einem vorderen Bereich der zweiten Stufe 17. Ein vorderes Ende 39 der dritten Stufe 21 ist in vertikaler Richtung betrachtet unterhalb des hinteren Endes 37 der zweiten Stufe 17 positioniert. Ein hinteres Ende 40 der dritten Stufe 21 befindet sich oberhalb des Reinigungsorgans 4, vorzugsweise oberhalb des Obersiebs 24, sodass Erntegutbestandteile hintenseitig von der dritten Stufe 21 auf das Reinigungsorgan 4 herabfallen können. In Verlängerung an die zweite Stufe 17 und dritte Stufe 21 ist an dessen hinteren Ende 37, 40 jeweils ein an sich bekannter Siebrechen 41 angeordnet.

Das vordere Ende 36 der zweiten Stufe 17 ist von einem Verlängerungselement 42 gebildet, welches eine in sich gestufte Oberfläche 43 aufweist. Hier und vorzugsweise ist das Verlängerungselement 42 untenseitig an der zweiten Stufe 17 ortsfest angeordnet, insbesondere verschweißt oder verschraubt und bildet einen vorderen Teil der zweiten Stufe 17 aus. Die gestufte Oberfläche 43 bewirkt, dass Früchte, die auf der zweiten Stufe 17 in Richtung des vorderen Endes 36 herabrutschen, wieder nach hinten befördert werden, sodass am vorderen Ende 36 der zweiten Stufe 17 keine oder zumindest weniger Früchte herabfallen und somit verloren gehen. Zur Vermeidung von Kornverlusten bzw. dem Verlust von Früchten ist die Erstreckung der zweiten Stufe 17 bis unterhalb des vorderen Endes 31 der ersten Stufe 16 insbesondere in Kombination mit der gestuften Oberfläche 43 besonders wirksam. Hier und vorzugsweise befindet sich im Bereich des vorderen Endes 43 der zweiten Stufe 17 ein zusätzlicher Rieselkornschutz, der in Form eines Labyrinth 44 ausgeführt ist und einem Verlust von Früchten am vorderen Ende 36 der zweiten Stufe 17 entgegenwirkt. Herbei erstreckt sich zumindest ein Leitblech 45 ausgehend von dem hinteren Ende 36 im Wesentlichen in vertikaler Richtung nach oben, wobei das sich nach oben erstreckende Leitblech 45, von einer bogenförmigen Gehäusestruktur 46 obenseitig umgeben ist. Zwischen der ersten Stufe 16 und der zweiten Stufe 17 ist ein Kanal 47 ausgebildet, der obenseitig von der Unterseite der ersten Stufe 16 und untenseitig von der Oberseite der zweiten Stufe 17 begrenzt ist. Der Kanal 47 wirkt zusammen mit dem Saugwindgebläse 8 als Luftleitkanal 47, durch den hindurch zumindest ein Teil 29 des von dem Saugwindgebläse 8 angesaugten Luftvolumenstroms 9 hindurchgeführt wird und die erste Fallstufe 27 durchdringt.

**Bezugszeichenliste:**

| | | | |
|---|---|---|---|
| 1 | Mähdrescher | 34 | Häckselorgan |
| 2 | Dreschorgan | 35 | Förderorgan |
| 3 | Trennorgan | 36 | Vorderes Ende |
| 4 | Reinigungsorgan | 37 | Hinteres Ende |
| 5 | Obersieb | 38 | Länge |
| 6 | Untersieb | 39 | Vorderes Ende |
| 7 | Austragorgan | 40 | Hinteres Ende |
| 8 | Saugwindgebläse | 41 | Siebrechen |
| 9 | Luftvolumenstrom | 42 | Verlängerungselement |
| 10 | Saugseite | 43 | Gestufte Oberfläche |
| 11 | Druckseite | 44 | Labyrinth |
| 12 | Beschleunigungstrommel | 45 | Leitblech |
| 13 | Dreschtrommel | 46 | Bogenförmige Gehäusestruktur |
| 14 | Korbabschnitt | 47 | Kanal |
| 15 | Knickstelle | 48 | Steinfangmulde |
| 16 | Erste Stufe | | |
| 17 | Zweite Stufe | | |
| 18 | Erster Teil des Luftvolumenstroms | | |
| 19 | Zweiter Teil des Luftvolumenstroms | | |
| 20 | Dritter Teil des Luftvolumenstroms | | |
| 21 | Dritte Stufe | | |
| 22 | Vorbereitungsboden | | |
| 23 | Dreschkorb | | |
| 24 | Oberseite | | |
| 25 | Unterseite | | |
| 26 | Unterseite | | |
| 27 | Erste Fallstufe | | |
| 28 | Zweite Fallstufe | | |
| 29 | Vierte Teil des Luftvolumenstroms | | |
| 30 | Fünfte Teil des Luftvolumenstroms | | |
| 31 | Vorderes Ende | | |
| 32 | Hinteres Ende | | |
| 33 | Raum | | |

## Patentansprüche

1. Selbstfahrender Mähdrescher (1), umfassend
- ein Dreschorgan (2) zur Ablösung von Früchten aus Pflanzen,
- einen unterhalb des Dreschorgans (2) angeordneten Vorbereitungsboden (22),
welchem die aus dem Dreschorgan (2) abgeschiedenen Früchte zuführbar sind, wobei der Vorbereitungsboden (22) als ein Stufenboden mit zumindest einer ersten Stufe (16) und einer zweiten Stufe (17) ausgebildet ist,
- ein Reinigungsorgan (4) mit einem Obersieb (5) und einem Untersieb (6) zur Trennung abgelöster Früchte von Pflanzenresten,
**dadurch gekennzeichnet, dass**
die zweite Stufe (17) des Vorbereitungsbodens (22) unterhalb der ersten Stufe (16) angeordnet ist und sich in Längsrichtung des Mähdreschers (1) betrachtet im Wesentlichen entlang der gesamten Länge (38) der ersten Stufe (16) erstreckt.

2. Selbstfahrender Mähdrescher (1) nach Anspruch 1, **dadurch gekennzeichnet, dass** der Mähdrescher (1) ein in Längsrichtung des Mähdreschers (1) hinter dem Reinigungsorgan (4) angeordnetes Saugwindgebläse (8) zur Erzeugung eines Luftvolumenstroms (9), mittels dessen das Reinigungsorgan (4) fortwährend reinigbar ist umfasst, wobei das Saugwindgebläse (8) eine dem Reinigungsorgan (4) zugeordnete Saugseite (10), an der der Luftvolumenstrom (9) ansaugbar ist, und eine von dem Reinigungsorgan (4) weg gerichtete Druckseite (11), an der der Luftvolumenstrom (9) abgebbar ist.

3. Selbstfahrender Mähdrescher (1) nach einem der Anspruche 1 oder 2, **dadurch**
**gekennzeichnet, dass** die Stufen (16, 17, 21) beabstandet zueinander angeordnet sind und zwischen zwei benachbarten Stufen (16, 17, 21) jeweils eine Fallstufe (27, 28) ausgebildet ist.

4. Selbstfahrender Mähdrescher (1) nach einem der Ansprüche 2 bis 3, **dadurch**
**gekennzeichnet, dass** zwischen der ersten Stufe (16) und der zweiten Stufe (17) ein Luftleitkanal (47) ausgebildet ist, durch den hindurch zumindest ein Teilstrom (29) des Luftvolumenstroms (9) ansaugbar ist.

5. Selbstfahrender Mähdrescher (1) nach einem der Ansprüche 1 bis 4, **dadurch gekennzeichnet, dass** die zweite Stufe (17) an ihrem vorderen Ende (36) ein Verlängerungselement (42) mit einer gestuften Oberfläche (43) umfasst, wobei das Verlängerungselement (42) vorzugsweise untenseitig an der ersten Stufe (16) ortsfest angeordnet, insbesondere verschraubt oder verschweißt ist.

6. Selbstfahrender Mähdrescher (1) nach einem der Ansprüche 1 bis 5, **dadurch**
**gekennzeichnet, dass** die zweite Stufe (17) sich in Längsrichtung des Mähdreschers (1) betrachtet unterhalb des Dreschorgans (2) erstreckt und in einem hinter dem Dreschorgan (2) befindlichen Bereich mit einer unterhalb der zweiten Stufe (17) befindlichen dritten Stufe (21) eine weitere Fallstufe (28) ausbildet.

7. Selbstfahrender Mähdrescher (1) nach einem der Ansprüche 1 bis 6, **dadurch gekennzeichnet, dass** das Dreschorgan (2) zumindest eine Dreschtrommel (13) und eine der Dreschtrommel (13) vorgeordnete Beschleunigungstrommel (12) umfasst,
wobei zwischen einem die Dreschtrommel (13) abschnittsweise umgebenden Dreschkorb (23) und einem die Beschleunigungstrommel (12) abschnittsweise umgebenden Korbabschnitt (14) eine Knickstelle (15) ausgebildet ist, wobei sich die erste Stufe (16) in Längsrichtung des Mähdreschers (1) betrachtet ausgehend von einem vorderen Ende (31) bis zu einem hinteren Ende (32) erstreckt, wobei das hintere Ende (32) vor der Knickstelle (15) oder unterhalb der Knickstelle (15) positioniert ist.

8. Selbstfahrender Mähdrescher (1) nach einem der Ansprüche 1 bis 7, **dadurch gekennzeichnet, dass** an dem vorderen Ende (36) der zweiten Stufe (17) zur Vermeidung von Kornverlusten ein Labyrinth (44) ausgebildet ist.
